# EUROPÄISCHE PATENTSCHRIFT

(11) **EP 2 847 478 B1**
(45) Veröffentlichungstag und Bekanntmachung des Hinweises auf die Patenterteilung: **07.12.2016**
(21) Anmeldenummer: 12738395.8
(22) Anmeldetag: 04.07.2012
(51) Int. Cl.: F16C 29/06

(54) **LINEARFÜHRUNGSEINRICHTUNG**
LINEAR GUIDE DEVICE
DISPOSITIF DE GUIDAGE LINÉAIRE

(43) Veröffentlichungstag der Anmeldung: 18.03.2015
(73) Patentinhaber: FESTO AG & Co. KG, 73734 Esslingen (DE)
(72) Erfinder: FEYRER, Thomas, 73732 Esslingen (DE)
(74) Vertreter: Patentanwälte Magenbauer & Kollegen Partnerschaft mbB
(86) Internationale Anmeldenummer: PCT/EP2012/002803
(87) Internationale Veröffentlichungsnummer: WO 2014/005604

(56) Entgegenhaltungen:
- EP-A2- 0 121 065
- DE-A1- 2 129 024
- DE-U1- 8 807 631
- US-A- 3 398 999

## Beschreibung

Die Erfindung betrifft eine Linearführungseinrichtung, mit mindestens einer Linearführungseinheit, die ein Gehäuse aufweist, das mindestens einen ringförmig in sich geschlossenen Umlaufkanal definiert, der eine Vielzahl von in der Kanallängsrichtung aufeinanderfolgend angeordneten Wälzlagerelementen aufnimmt, die eine Umlaufbewegung in der Kanallängsrichtung ausführen können, wobei der Umlaufkanal einen die sich in ihm befindenden Wälzlagerelemente gegen äußere Kräfte abstützenden geradlinigen Abstütz-Kanalabschnitt und einen zu dem Abstütz-Kanalabschnitt beabstandeten Rücklauf-Kanalabschnitt aufweist, wobei der Abstütz-Kanalabschnitt längsseits über einen das partielle Hindurchragen der sich in dem Abstütz-Kanalabschnitt befindenden Wälzlagerelemente ermöglichenden Arbeits-Längsschlitz verfügt und das Gehäuse einen Kernkörper und einen den Kernkörper umschließenden, in sich geschlossenen Rahmenkörper aufweist, wobei ein vorderer Rahmenschenkel des Rahmenkörpers einen Wandabschnitt des Abstütz-Kanalabschnittes und ein hinterer Rahmenschenkel des Rahmenkörpers einen Wandabschnitt des Rücklauf-Kanalabschnittes bildet und wobei das Gehäuse einen Abdeckkörper aufweist, der einen Wandabschnitt des Abstütz-Kanalabschnittes bildet und gemeinsam mit dem Kernkörper und dem vorderen Rahmenschenkel den Abstütz-Kanalabschnitt begrenzt.

Eine aus der US 3,304,133 bekannte Linearführungseinrichtung enthält eine kassettenartige Linearführungseinheit, deren Gehäuse einen länglichen, ringförmigen Umlaufkanal definiert, in dem eine Vielzahl zylindrischer Wälzlagerelemente angeordnet ist. Der Umlaufkanal enthält einen sich linear erstreckenden Abstütz-Kanalabschnitt, der gemeinsam von einem leistenförmigen Lagerelement und einer auf das Lagerelement aufgesetzten Abdeckung begrenzt wird. Die Abdeckung hat einen Längsschlitz, durch den die momentan wirksamen Wälzlagerelemente partiell hindurchragen können. An den Abstütz-Kanalabschnitt schließen sich stirnseitig zwei Umlenk-Kanalabschnitte an, die in einen zu dem Abstütz-Kanalabschnitt parallelen Rücklauf-Kanalabschnitt übergehen. Der Rücklauf-Kanalabschnitt ist gemeinsam mit den beiden Umlenk-Kanalabschnitten von zwei aneinander angesetzten Gehäusehälften definiert, in die in einer Aussparung das Leistenelement eingesetzt ist und an denen auch die den Arbeits-Längsschlitz definierende Abdeckung angebracht ist. Die Herstellung und Montage dieser Linearführungseinheit scheint relativ aufwendig zu sein.

Die DE 31 48 331 A1 beschreibt ein Linearkugellager, bei dem in einem entlang einer Führungsschiene verschiebbaren Lagergehäuse mehrere mit kugelförmigen Wälzlagerelementen gefüllte Umlaufkanäle ausgebildet sind. Das Lagergehäuse setzt sich aus einem U-förmigen Mittelstück und zwei stirnseitig daran angesetzten Kopfelementen zusammen, wobei die Kopfelemente in eine Ausnehmung des U-förmigen Mittelstücks eintauchen, um zur Bildung der Umlaufkanäle beizutragen.

Die EP 0 121 065 A2 offenbart eine Linearführungseinrichtung der eingangs genannten Art, die eine Linearführungseinheit enthält, die ein mehrteiliges Gehäuse aufweist. Das Gehäuse verfügt über einen rahmenförmigen Bestandteil, der einen zylindrischen Laufköper umschließt und an dem Deckplatten befestigt sind. In dem rahmenförmigen Bestandteil sind Schlitze ausgebildet, durch die Wälzkugeln hindurchragen.

Der Erfindung liegt die Aufgabe zugrunde, eine einfach aufgebaute und leicht zu montierende Linearführungseinrichtung zu schaffen, die präzise und verschleißarm arbeitet.

Zur Lösung dieser Aufgabe ist in Verbindung mit den eingangs genannten Merkmalen vorgesehen, dass der Arbeits-Längsschlitz längsseits einerseits von dem Abdeckkörper und andererseits von dem vorderen Rahmenschenkel begrenzt ist.

Bei einer solchen Linearführungseinrichtung verfügt die mindestens eine Linearführungseinheit über ein Gehäuse, dessen Komponenten teilweise ineinander verschachtelt sind, so dass sich ein kompakter und dennoch stabiler Aufbau ergibt. Das Gehäuse enthält einen Rahmenkörper, der einen Kernkörper umschließt und dabei mit einem vorderen Rahmenschenkel zur Bildung des Abstütz-Kanalabschnittes und mit einem hinteren Rahmenschenkel zur Bildung des Rücklauf-Kanalabschnittes beiträgt. Somit lässt sich die Linearführungseinheit einfach und kostengünstig herstellen und montieren. Das mehrteilige Gehäuse verfügt über einen Abdeckkörper, der einen Wandabschnitt des Abstütz-Kanalabschnittes bildet und gemeinsam mit dem Kernkörper und dem vorderen Rahmenschenkel den Abstütz-Kanalabschnitt begrenzt. Bei abgenommenem Abdeckkörper besteht zweckmäßigerweise die Möglichkeit, in den dann freiliegenden Abstütz-Kanalabschnitt beim Zusammenbau der Linearführungseinheit die Wälzlagerelemente einzubringen. Der von den momentan wirksamen Wälzlagerelementen partiell durchgreifbare Arbeits-Längsschlitz ist längsseits einerseits von dem vorderen Rahmenschenkel und andererseits von dem Abdeckkörper begrenzt. Der Arbeits-Längsschlitz ist derart schmäler als jedes Wälzlagerelement, dass die Wälzlagerelemente an einem vollständigen Hindurchtreten durch den Arbeits-Längsschlitz gehindert sind.

Die Linearführungseinrichtung kann mit nur einer oder mit mehreren Linearführungseinheiten ausgestattet sein. Jede Linearführungseinheit ist vorzugsweise kassettenartig strukturiert.

Vorteilhafte Weiterbildungen der Erfindung gehen aus den Unteransprüchen hervor.

Der Kernkörper definiert zweckmäßigerweise einen Wandabschnitt des Abstütz-Kanalabschnittes, der als Abstützfläche für die sich momentan in dem Abstütz-Kanalabschnitt befindenden Wälzlagerelemente fungiert. Wenn diese Wälzlagerelemente während des Einsatzes der Linearführungseinrichtung einer beispielsweise von einer mit der Linearführungseinheit kooperierenden Führungsschiene stammenden Kraft ausgesetzt sind, können sie sich somit optimal an dem Kernkörper abstützen. Der Kernkörper besteht bevorzugt aus einem verschleißfesten Material, insbesondere aus Stahl.

Der hintere Rahmenschenkel taucht zweckmäßigerweise in eine rückseitig in dem Kernkörper ausgebildete Längsnut ein und definiert gemeinsam mit dem Kernkörper die Kanalwand des Rücklauf-Kanalabschnittes des Umlaufkanals. Der Kernkörper kann eine vorteilhafte Mehrfachfunktion erfüllen, indem er zum einen wie erwähnt die Abstützfläche für die wirksamen Wälzlagerelemente bildet und zum anderen auch zur Bildung des Rücklauf-Kanalabschnittes des Umlaufkanals beiträgt. Somit lässt sich die Linearführungseinheit besonders einfach und kostengünstig herstellen und montieren.

Der Rahmenkörper ist bevorzugt derart um den Kernkörper herum angeordnet, dass eine von dem Rahmenkörper aufgespannte Rahmenebene mit der Längsachse der Abstützrippe zusammenfällt.

Der in den Rahmenkörper eingesetzte Kernkörper wird von den Rahmenschenkeln des Rahmenkörpers zweckmäßigerweise derart abgestützt, dass zwischen dem Rahmenkörper und dem Kernkörper keine Relativbewegung in einer von den Rahmenschenkeln aufgespannten Rahmenebene möglich ist. Auf diese Weise erübrigen sich zur gegenseitigen Fixierung von Kernkörper und Rahmenkörper zusätzliche Maßnahmen.

Besonders zweckmäßig ist in diesem Zusammenhang eine Ausgestaltung, bei der sich der Rahmenkörper mit seinem hinteren Rahmenschenkel am Nutgrund der Längsnut des Kernkörpers abstützt und sich gleichzeitig mit seinem vorderen Rahmenschenkel an der der Längsnut abgewandten Vorderfläche, die auch als Kopffläche bezeichnet werden kann, abstützt.

Hinsichtlich des hinteren Rahmenschenkels liegt zweckmäßigerweise eine derartige Anpassung an die Breite der Längsnut vor, dass er sich gleichzeitig an beiden Nutflanken dieser Längsnut abstützt.

Vorteilhafterweise weist der Umlaufkanal auch zwei stirnseitig angeordnete, jeweils zum einen mit dem Abstütz-Kanalabschnitt und zum anderen mit dem Rücklauf-Kanalabschnitt verbundene bogenförmige und insbesondere U-förmig verlaufende Umlenk-Kanalabschnitte auf.

Der Rahmenkörper setzt sich zweckmäßigerweise außer aus dem vorderen und dem hinteren Rahmenschenkel auch noch aus zwei stirnseitigen Rahmenschenkeln zusammen, die den vom Rahmenkörper umgriffenen Kernkörper stirnseitig flankieren. Jeder dieser beiden stirnseitigen Rahmenschenkel bildet zweckmäßigerweise jeweils einen Wandabschnitt eines der beiden Umlenk-Kanalabschnitte des mindestens einen Umlaufkanals.

In dem Rahmenkörper ist zweckmäßigerweise eine nutartige Vertiefung ausgebildet, die gleichzeitig Wandabschnitte des Rücklauf-Kanalabschnittes und der beiden Umlenk-Kanalabschnitte definiert.

Bevorzugt hat der Abdeckkörper eine U-förmige Gestalt, wobei er eine der U-Öffnung entsprechende Aussparung aufweist, die beidseits von den beiden U-Schenkeln entsprechenden Abdeckabschnitten flankiert ist. Die Abmessungen der Aussparung sind derart an die Abmessungen des Kernkörpers angepasst, dass der Kernkörper in die Aussparung eingreift und die beiden stirnseitigen Abdeckabschnitte stirnseitig über den Kernkörper hinausragen. Bevorzugt decken die beiden stirnseitigen Abdeckabschnitte jeweils einen der beiden stirnseitigen Rahmenschenkel des Rahmenkörpers zumindest partiell und bevorzugt zur Gänze ab und hierbei zumindest im Bereich des Umlenk-Kanalabschnittes.

Der Abdeckkörper ist zweckmäßigerweise im Bereich seiner beiden stirnseitigen Abdeckabschnitte am jeweils zugeordneten stirnseitigen Rahmenschenkel des Rahmenkörpers fixiert.

Eine bevorzugte Gestaltung des Kernkörpers verfügt über einen die rückseitige Längsnut definierenden Hauptabschnitt mit U-förmigem Querschnitt und über eine an der der Längsnut entgegengesetzten Seite an dem Hauptabschnitt in dessen Längsrichtung verlaufend angeordnete Abstützrippe, die die Abstützfläche des Abstütz-Kanalabschnittes definiert.

Rahmenkörper und Kernkörper sind bevorzugt in ihrer Gestaltung derart aneinander angepasst, dass eine vorteilhafte Montagemöglichkeit besteht. Hierbei wird der Rahmenkörper in einer ersten Montagephase in einer bezüglich des Kernkörpers eingenommenen Montage-Schräglage von der Rückseite des Kernkörpers her so auf den Kernkörper aufgesteckt, dass der hintere Rahmenschenkel in die Längsnut des Kernkörpers eintaucht und gleichzeitig der vordere Rahmenschenkel über den Kernkörper hinweggreift. In einer sich anschließenden zweiten Montagephase wird dann der Rahmenkörper um seinen in der Längsnut aufgenommenen hinteren Rahmenschenkel bezüglich des Kernkörpers verschwenkt, bis sein vorderer Rahmenschenkel eine dem Kernkörper vorgelagerte Stellung einnimmt.

Die mindestens eine Linearführungseinheit kann bei einer einfachen Ausgestaltung über nur einen einzigen Umlaufkanal verfügen. Bei einer hinsichtlich der auszuübenden Führungsfunktion optimierten Ausgestaltung ist die Linearführungseinheit mit zwei voneinander unabhängigen Umlaufkanälen ausgestattet, die zweckmäßigerweise in zwei zueinander parallelen Kanalebenen angeordnet sind. Bei einer Zweifachanordnung von Umlaufkanälen befindet sich zweckmäßigerweise auf einander entgegengesetzten Seiten des Rahmenkörpers jeweils einer der beiden Umlaufkanäle. Der Kernkörper bildet im Bereich seiner Längsnut für den Rücklauf-Kanalabschnitt jedes Umlaufkanals einen eigenen Wandabschnitt. Ebenso verfügt der Kernkörper im Bereich seiner Vorderseite über zwei Abstützflächen, die jeweils einem der beiden Abstütz-Kanalabschnitte zugeordnet sind. Ist der Kernkörper an seiner Vorderseite mit einer längsverlaufenden Abstützrippe ausgestattet, kann im Bereich jeder der beiden Seitenflächen dieser Abstützrippe und insbesondere im Übergangsbereich zwischen jeder Seitenfläche und der Kopffläche der Abstützrippe eine Abstützfläche für einen der beiden Abstütz-Kanalabschnitte ausgebildet sein.

Eine mit zwei Umlaufkanälen ausgestattete Linearführungseinheit enthält zum partiellen Abdecken jedes Umlaufkanals zweckmäßigerweise einen eigenen Abdeckkörper. Hierbei ist dann zweckmäßigerweise die ineinander verschachtelte Anordnung aus Rahmenkörper und Kernkörper sandwichartig zwischen zwei Abdeckkörpern angeordnet.

Die Linearführungseinrichtung enthält zweckmäßigerweise mindestens eine bevorzugt über eine lineare Erstreckung verfügende Führungsschiene, die mit mindestens einer Linearführungseinheit kooperiert. Die betreffende Linearführungseinheit liegt mit den Abschnitten ihrer Wälzlagerelemente, die durch den Arbeits-Längsschlitz hindurchragen, an der Führungsschiene an. Diese Wälzlagerelemente stützen sich somit einerseits an der Führungsschiene und andererseits an der bevorzugt von dem Kernkörper gebildeten Abstützfläche ab. Die Abstützfunktion bezüglich der Wälzlagerelemente wird somit innerhalb der Linearführungseinheit ausschließlich von dem Kernkörper übernommen, der zweckmäßigerweise auch diejenige Komponente ist, mittels der die Linearführungseinheit an einer zu führenden Komponente, beispielsweise an einem Führungsschlitten, fixiert wird. Der Kernkörper weist zu diesem Zweck vorzugsweise mindestens eine Befestigungsschnittstelle auf.

Innerhalb des Abstütz-Kanalabschnittes sind die Wälzlagerelemente bevorzugt quer zur Kanallängsrichtung mit geringem Spielraum angeordnet, so dass ein verschleißarmer Übertritt zwischen den Umlenk-Kanalabschnitten und dem Abstütz-Kanalabschnitt möglich ist.

Nachfolgend wird die Erfindung anhand der beiliegenden Zeichnung näher erläutert. In dieser zeigen:
- Figur 1: eine bevorzugte Ausgestaltung einer erfindungsgemäßen Linearführungseinrichtung, bei der mehrere Linearführungseinheiten an einem Führungsschlitten befestigt sind und mit jeweils einer an einem Tragkörper fixierten Führungsschiene kooperieren,
- Figur 2: die Linearführungseinrichtung aus Figur 1 in einer Stirnansicht mit Blickrichtung gemäß Pfeil II aus Figur 1,
- Figur 3: die in Figur 2 in dem umrahmten Bereich III abgebildete Linearführungseinheit in einer perspektivischen Einzeldarstellung,
- Figur 4: die Linearführungseinheit aus Figur 3 in einer Stirnansicht mit Blickrichtung gemäß Pfeil IV aus Figur 3,
- Figur 5: die Linearführungseinheit aus Figuren 3 und 4 in einem Längsschnitt gemäß Schnittlinie V-V aus Figur 4 und aus Figur 11,
- Figur 6: eine Explosionsdarstellung der Linearführungseinheit aus Figuren 3 bis 5, wobei ein oben liegender Abdeckkörper nur schematisch strichpunktiert angedeutet ist,
- Fig. 7-10: verschiedene Montagephasen bei einer bevorzugten Art der Montage beziehungsweise des Zusammenbaus einer Linearführungseinheit gemäß Figuren 3 bis 6, und
- Figur 11: einen Querschnitt durch die zusammengebaute Linearführungseinheit gemäß Schnittlinie XI-XI aus Figur 5.

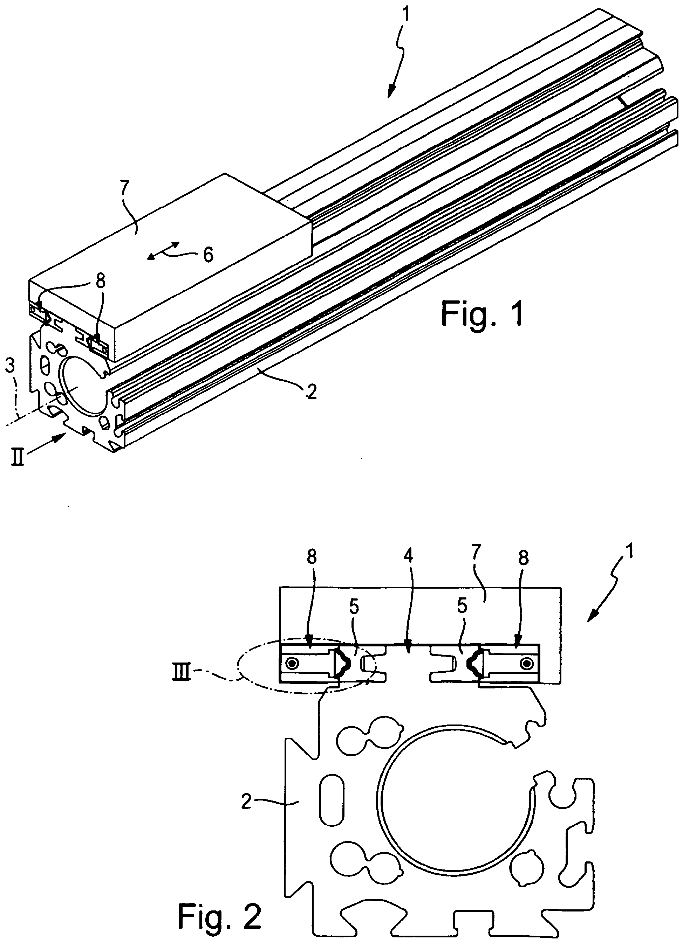

Die in Figuren 1 und 2 illustrierte Linearführungseinrichtung 1 enthält einen Tragkörper 2, an dem unter Bildung einer eine Längsachse 3 aufweisenden Führungsstruktur 4 zwei lineare Führungsschienen 5 so angeordnet sind, dass sie parallel zu der Längsachse 3 ausgerichtet sind. Auf der Führungsstruktur 4 sitzt, gemäß Doppelpfeil 6 in Achsrichtung der Längsachse 3 verfahrbar, ein Führungsschlitten 7, der die Führungsstruktur 4 reiterartig übergreift und an jeder Führungsschiene 5 mittels einer Linearführungseinheit 8 verschiebbar gelagert ist.

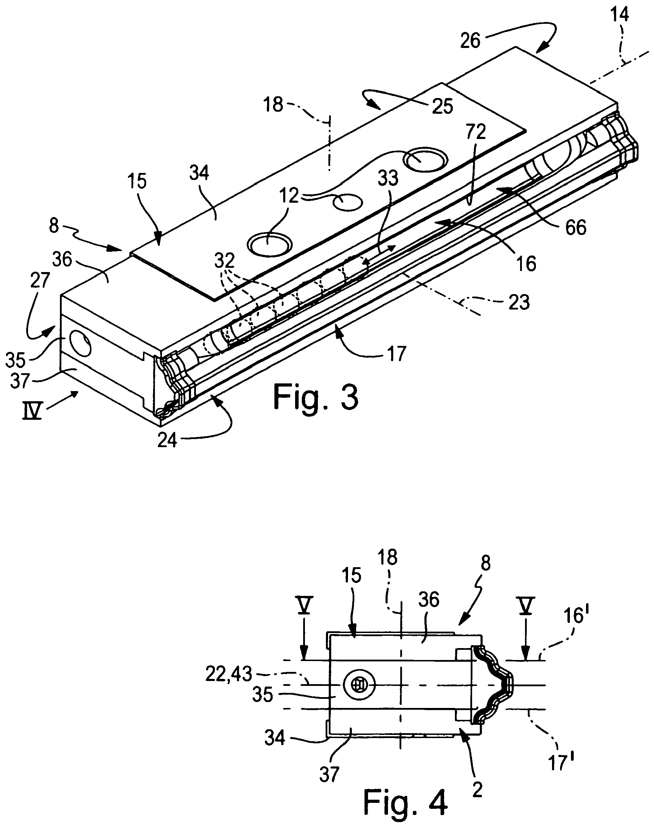

Die beiden Linearführungseinheiten 8 sind bevorzugt identisch ausgebildet. Eine davon ist in Figuren 3 bis 11 einzeln illustriert. Diese weiteren Figuren zeigen auch mindestens eine an der Linearführungseinheit 8 ausgebildete Befestigungsschnittstelle 12, mit der sie in bevorzugt lösbarer Weise an dem Führungsschlitten 7 befestigt ist.

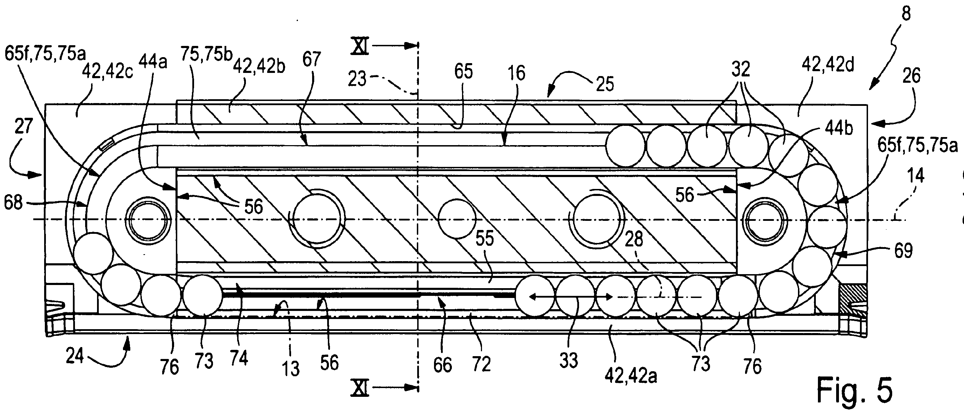

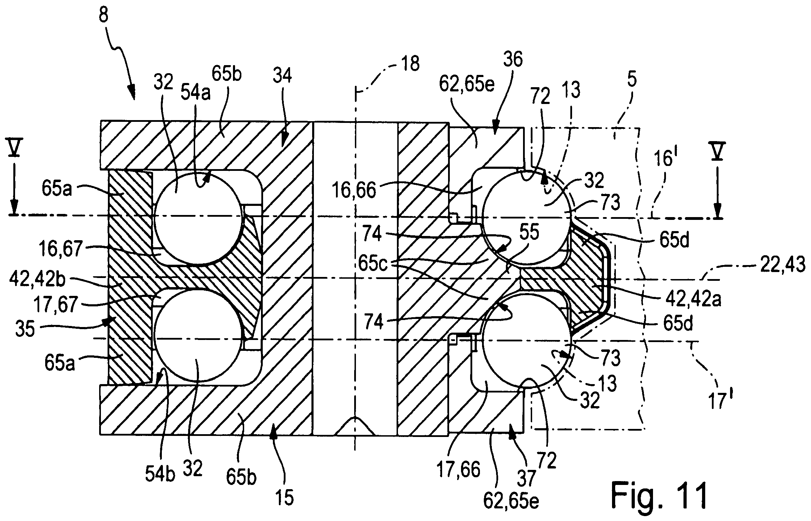

In Figur 11 ist die mit der Linearführungseinheit 8 kooperierende Führungsschiene 5 strichpunktiert angedeutet. Sie enthält zum Zusammenwirken mit jeder Linearführungseinheit 8 zwei zueinander parallele, sich in der Längsrichtung der Führungsschiene 5 erstreckende Führungsflächen 13, die in Figur 11 ersichtlich sind und von denen eine auch in Figur 5 durch eine strichpunktierte Linie angedeutet ist.

Im Folgenden soll anhand der Figuren 3 bis 11 ein bevorzugter Aufbau der Linearführungseinheit 8 erläutert werden.

Die Linearführungseinheit 8 ist bevorzugt nach Art einer Kassette strukturiert und hat eine längliche Gestalt mit Längsachse 14. Sie verfügt über ein mehrteiliges Gehäuse 15, das in seinem Innern zwei ringförmig in sich geschlossene Umlaufkanäle 16, 17 enthält, die über eine langgestreckte Gestaltung entlang der Längsachse 14 verfügen. Die Linearführungseinheit 8 hat eine zu der Längsachse 14 rechtwinkelige Hochachse 18, wobei sich jeder Umlaufkanal 16, 17 in einer von zwei zueinander parallelen Kanalebenen 16', 17' erstreckt, die in Achsrichtung der Hochachse 18 beabstandet zueinander angeordnet sind.

Die Linearführungseinheit 8 ist zweckmäßigerweise bezüglich einer Mittelebene 22 spiegelsymmetrisch aufgebaut. Die beiden Kanalebenen 16', 17' und mithin die beiden Umlaufkanäle 16, 17 liegen in Achsrichtung der Hochachse 18 mit gleichem Abstand diesseits und jenseits der Mittelebene 22. Selbige verläuft rechtwinkelig zur Hochachse 18.

Die Linearführungseinheit 8 hat auch noch eine sowohl zu der Längsachse 14 als auch zu der Hochachse 18 rechtwinkelige Querachse 23. Die beiden einander entgegengesetzt in Achsrichtung der Querachse 23 orientierten Seiten der Linearführungseinheit 8 seien im Folgenden auch als Vorderseite 24 und Rückseite 25 bezeichnet, während die beiden einander entgegengesetzt in Achsrichtung der Längsachse 14 orientierten Seiten der Linearführungseinheit 8 auch als Stirnseiten 26, 27 bezeichnet werden sollen.

Jeder Umlaufkanal 16, 17 hat eine partiell geradlinige und partiell bogenförmig gekrümmte Längsachse 28, die im Folgenden auch als Kanallängsrichtung 28 bezeichnet werden soll. In jedem Umlaufkanal 16, 17 befindet sich eine Vielzahl individueller Wälzlagerelemente 32, die in der Kanallängsrichtung 28 aufeinanderfolgend angeordnet sind, so dass sich quasi eine Kette aus Wälzlagerelementen 32 ergibt. Bevorzugt sind die Wälzlagerelemente 32 in dem Umlaufkanal 16, 17 individuell aufgenommen und nicht aneinander fixiert.

Die Wälzlagerelemente 32 sind derart mit Bewegungsspiel im jeweiligen Umlaufkanal 16, 17 aufgenommen, dass sie im Umlaufkanal 16, 17 in der Kanallängsrichtung 28 beweglich sind und folglich in der Lage sind, eine durch einen Doppelpfeil angedeutete Umlaufbewegung 33 in der Kanallängsrichtung 28 im Innern des jeweiligen Umlaufkanals 16, 17 auszuführen.

In der Zeichnung sind der besseren Übersichtlichkeit wegen nur einige der im Umlaufkanal 17 angeordneten Wälzlagerelemente 32 gezeigt, die in Figur 3 dazuhin nur gestrichelt angedeutet sind. Die Wälzlagerelemente 32 sind derart dicht aufeinanderfolgend angeordnet, dass die gesamte Kette aus Wälzlagerelementen 32 zu einer Umlaufbewegung 33 angetrieben wird, wenn auch nur in eines der Wälzlagerelemente 32 eine in der Kanallängsrichtung 28 orientierte Stellkraft eingeleitet wird.

Die Wälzlagerelemente 32 des Ausführungsbeispiels sind in vorteilhafter Weise kugelförmig gestaltet. Bei einem nicht illustrierten Ausführungsbeispiel handelt es sich um kreiszylindrische Wälzlagerelemente 32, die insbesondere so angeordnet sind, dass in der Kanallängsrichtung 28 unmittelbar aufeinanderfolgende Wälzlagerelemente 32 über winkelig zueinander ausgerichtete Längsachsen verfügen.

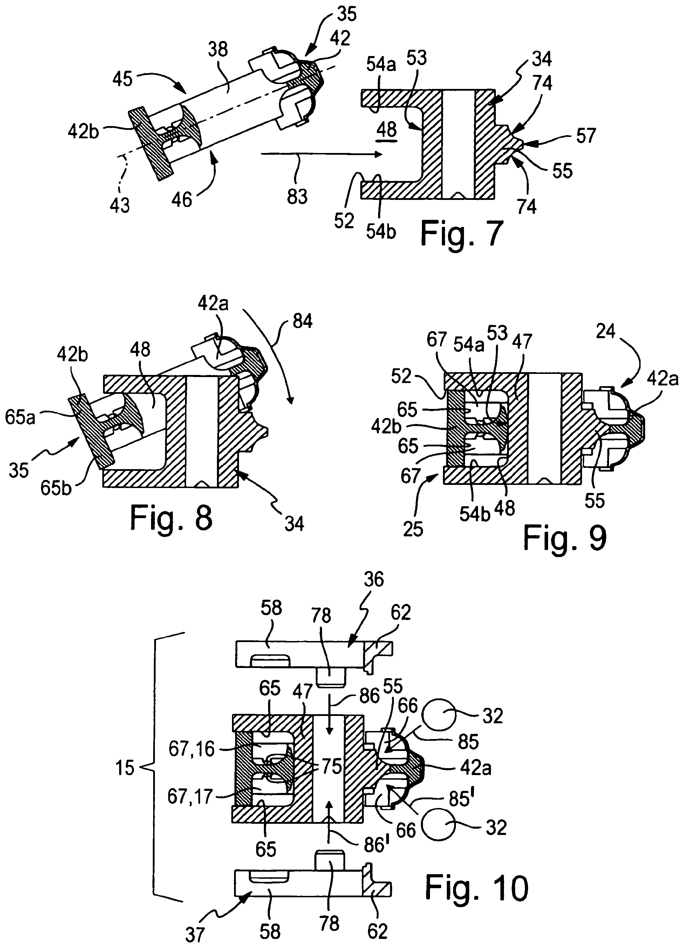

Das Gehäuse 15 verfügt über einen mehrteiligen Aufbau. Es enthält einen Kernkörper 34 und einen Rahmenkörper 35. Darüber hinaus enthält es zweckmäßigerweise pro Umlaufkanal 16, 17 einen Abdeckkörper 36, 37, so dass die Linearführungseinheit 8 des Ausführungsbeispiels mit zwei Abdeckkörpern 36, 37 ausgestattet ist. Diese im Folgenden gemeinsam auch als Gehäusekörper 34-37 bezeichneten Bestandteile der Linearführungseinheit 8 sind zu einer fest zusammenhaltenden Baugruppe zusammengefasst, die das Gehäuse 15 bildet. Ein zum Zusammenbauen der Gehäusekörper 34-37 vorteilhafter Montageprozess ist in Figuren 7 bis 10 illustriert und wird später noch erläutert.

Der vorzugsweise aus gehärtetem Stahl oder einem vergleichbar belastbaren Material bestehende Kernkörper 34 hat eine längliche Erstreckung mit Längsachse 34a. Auch der Rahmenkörper 35 hat eine längliche Erstreckung mit einer Längsachse 35a. Der Kernkörper 34 ist mit zu der Längsachse 35a paralleler Längsachse 34a in eine von dem Rahmenkörper 35 umrahmte Rahmenöffnung 38 eingesetzt, so dass er von dem Rahmenkörper 35 umrahmt wird.

Der Rahmenkörper 35 ist ein in sich geschlossenes ringförmiges Gebilde und setzt sich aus vier bevorzugt einstückig miteinander verbundenen Rahmenschenkeln 42 zusammen, bei denen es sich um einen zu der Längsachse 35a parallelen vorderen Rahmenschenkel 42a und einen zu der Längsachse 35a ebenfalls parallelen hinteren Rahmenschenkel 42b handelt sowie ferner um zwei den vorderen und hinteren Rahmenschenkel 42a, 42b jeweils verbindende stirnseitige Rahmenschenkel 42c, 42d. Während der vordere und hintere Rahmenschenkel 42a, 42b jeweils bevorzugt stegförmig gestaltet ist, verfügen die beiden stirnseitigen Rahmenschenkel 42c, 42d bevorzugt über eine plattenartige Formgebung. Alle Rahmenschenkel 42 gemeinsam spannen eine Rahmenebene 43 des Rahmenkörpers 35 auf, die rechtwinkelig zu der Hochachse 18 ausgerichtet ist.

Der Kernkörper 34 hat zwei einander entgegengesetzt in Achsrichtung seiner Längsachse 34a orientierte erste und zweite Stirnflächen 44a, 44b. An diesen beiden Stirnflächen 44a, 44b ist er von jeweils einem der beiden stirnseitigen Rahmenschenkel 42c, 42d flankiert. Des Weiteren ist der Kernkörper 34 im Bereich der Vorderseite 24 von dem vorderen Rahmenschenkel 42a und im Bereich der Rückseite 25 von dem hinteren Rahmenschenkel 42b flankiert. Die Höhe des Kernkörpers 34 ist größer als diejenige des Rahmenkörpers 35, so dass der Kernkörper 34 an einer Oberseite 45 und an einer Unterseite 46 aus der Rahmenöffnung 38 herausragt und bezüglich des Rahmenkörpers 35 jeweils vorsteht.

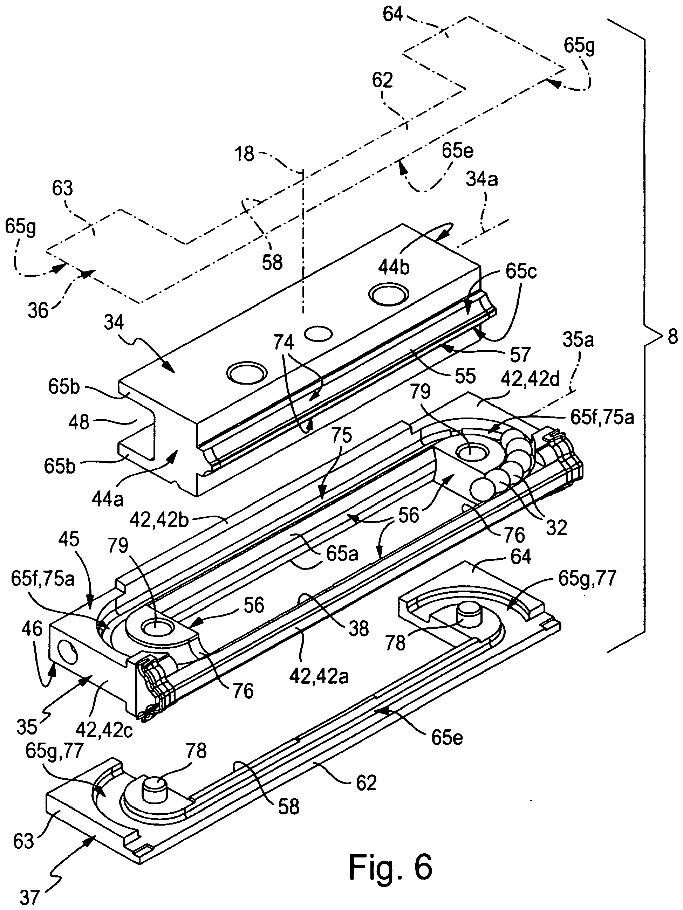

Wie aus Figur 6 und den in Figuren 7 bis 11 illustrierten Querschnitten ersichtlich ist, verfügt der Kernkörper 34 zweckmäßigerweise über einen im Querschnitt gesehen U-förmigen Hauptabschnitt 47 mit zur Rückseite weisender U-Öffnung, wobei die U-förmige Querschnittskontur aus einer rückseitig in dem Kernkörper 34 ausgebildeten Längsnut 48 resultiert, die sich in Achsrichtung der Längsachse 34a erstreckt und stirnseitig zu den beiden Stirnflächen 44a, 44b ausmündet. Die Längsnut 48 hat eine längsseitige Nutöffnung 52, die der Rückseite 25 zugewandt ist und der ein ebenfalls nach rückwärts weisender Nutgrund 53 gegenüberliegt. Seitlich ist die Längsnut 48 von je einer Nutflanke 54a, 54b begrenzt.

Der Hauptabschnitt 47 trägt im Bereich der Vorderseite 24 einen sich in Achsrichtung der Längsachse 34a erstreckenden rippenförmigen Vorsprung, der aufgrund einer noch zu erläuternden Funktion als Abstützrippe 55 bezeichnet sei. Die Abstützrippe 55 ist bevorzugt höhenmittig an dem Hauptabschnitt 47 angeordnet. Die Abstützrippe 55 erstreckt sich zweckmäßigerweise in der Rahmenebene 43, die bevorzugt mit der Mittelebene 22 zusammenfällt.

Der Kernkörper 34 ist derart in den Rahmenkörper 35 eingesetzt, dass der hintere Rahmenschenkel 42b, bevorzugt mit seinem gesamten Querschnitt, in die Längsnut 48 eintaucht und die Längsnut 48 in ihrer Längsrichtung durchsetzt. Der vordere Rahmenschenkel 42a ist dabei der Abstützrippe 55 im Bereich der Vorderseite 24 vorgelagert. Insgesamt stützt sich der Rahmenkörper 35 mit den Innenflächen 56 seiner vier Rahmenschenkel 42 zum einen an den beiden Stirnflächen 44a, 44b und zum anderen sowohl an der Vorderseite 24 als auch an der Rückseite 25 des Kernkörpers 34 ab, so dass der Rahmenkörper 35 und der Kernkörper 34 in der Rahmenebene 43 relativ zueinander unbeweglich fixiert sind. Im Bereich der Rückseite 25 erfolgt die Abstützung des hinteren Rahmenschenkels 42b bevorzugt am Nutgrund 53 der Längsnut 48, während im Bereich der Vorderseite 24 die Abstützung des vorderen Rahmenschenkels 42a an der sich in Achsrichtung der Längsachse 34a erstreckenden Kopffläche 57 der Abstützrippe 55 stattfindet, die vom Hauptabschnitt 47 weg nach vorne weist.

Der in die Längsnut 48 eingreifende hintere Rahmenschenkel 42b ist darüber hinaus zweckmäßigerweise von den beiden Nutflanken 54a, 54b in Achsrichtung der Hochachse 18 abgestützt und dadurch in seiner Lage fixiert.

Von den beiden Abdeckkörpern 36, 37 ist der eine, erste Abdeckkörper 36 an einer in Achsrichtung der Hochachse 18 orientierten Oberseite und der andere, zweite Abdeckkörper 37 an der diesbezüglich entgegengesetzten Unterseite der Linearführungseinheit 8 angeordnet. Exemplarisch hat jeder Abdeckkörper 36, 37 eine U-förmige Gestalt mit einer zu der Rückseite 25 hin offenen Aussparung 58, die im Bereich der Vorderseite 24 von einem stegartigen, sich parallel zu der Längsachse 34a erstreckenden vorderen Abdeckabschnitt 62 begrenzt ist und seitlich jeweils von einem von zwei stirnseitigen Abdeckabschnitten 63, 64. Letztere haben im Wesentlichen eine bevorzugt plattenförmige Ausdehnung.

Der Kernkörper 34 greift oben und unten mit seinem Hauptabschnitt 47 in die Aussparung 58 beider Abdeckkörper 36, 37 ein. Die stirnseitigen Abdeckabschnitte 63, 64 ragen dabei über die beiden Stirnflächen 44a, 44b hinaus und erstrecken sich über den sich dort befindlichen stirnseitigen Rahmenschenkel 42c, 42d hinweg. Auf diese Weise wird jeder stirnseitige Rahmenschenkel 42c, 42d von den beiden Abdeckkörpern 36, 37 an Oberseite und Unterseite jeweils zumindest partiell und vorzugsweise zur Gänze abgedeckt.

Der vordere Abdeckabschnitt 62 ist dem Hauptabschnitt 47 des Kernkörpers 34 im Bereich der Vorderseite 24 vorgelagert und erstreckt sich parallel zu der Abstützrippe 55, wobei die Abstützrippe 55 in Achsrichtung der Hochachse 18 zwischen den vorderen Abdeckabschnitten 62 der beiden Abdeckkörper 36, 37 angeordnet ist.

Der vordere Rahmenschenkel 42a steht zur Vorderseite 24 hin zweckmäßigerweise weiter vor als jeder vordere Abdeckabschnitt 62.

Die beiden Umlaufkanäle 16, 17, von denen der oberhalb der Mittelebene 22 liegende Umlaufkanal 16 auch als erster Umlaufkanal 16 und der unterhalb der Mittelebene 22 liegende Umlaufkanal 17 auch als zweiter Umlaufkanal 17 bezeichnet wird, sind jeweils derart im Innern des Gehäuses 15 ausgebildet, dass ihre Kanalwände 65 jeweils von Wandabschnitten des Kernkörpers 34, des Rahmenkörpers 35 und eines der beiden Abdeckkörper 36, 37 gebildet werden. Dabei ist bemerkenswert, dass sich jeder Längenabschnitt jedes Umlenkkanals 16, 17 aus Wandabschnitten wenigstens zweier der Gehäusekörper 34-37 zusammensetzt. Mit anderen Worten hat jeder Umlaufkanal 16 über seine gesamte Länge hinweg mindestens einen sich in der Kanallängsrichtung erstreckenden Fügebereich, der durch in der Umfangsrichtung des Kanalquerschnittes aneinander angrenzende Wandabschnitte wenigstens zweier Gehäusekörper 34-37 definiert ist.

Insgesamt ist jeder Umlaufkanal 16, 17 in seiner Kanallängsrichtung 28 funktionell in mehrere Kanal-Längenabschnitte eingeteilt, die ineinander übergehen. Einer dieser Kanal-Längenabschnitte befindet sich im Bereich der Vorderseite 24 der Linearführungseinheit 8 und bildet einen geradlinigen, bevorzugt parallel zur Längsachse 14 ausgerichteten Abstütz-Kanalabschnitt 66. Des Weiteren enthält jeder Umlaufkanal 16, 17 einen Rücklauf-Kanalabschnitt 67, der der Rückseite 25 zugeordnet ist. Der Rücklauf-Kanalabschnitt 67 ist vorzugsweise geradlinig ausgebildet und verläuft zweckmäßigerweise parallel zur Längsachse 14. Seine Länge entspricht bevorzugt derjenigen des Abstütz-Kanalabschnittes 66. Der Abstütz-Kanalabschnitt 66 und der Rücklauf-Kanalabschnitt 67 erstrecken sich jeweils entlang des Kernkörpers 34, wobei sie jeweils einerseits an der ersten Stirnfläche 44a und andererseits an der zweiten Stirnfläche 44b enden.

Den in die gleiche axiale Richtung orientierten Endabschnitten des Abstütz-Kanalabschnittes 66 und des Rücklauf-Kanalabschnittes 67 ist jeweils einer von zwei bogenförmigen Umlenk-Kanalabschnitten 68, 69 zugeordnet. Jeder Umlenk-Kanalabschnitt 68, 69 erstreckt sich in einer zu der Rahmenebene 43 parallelen Umlenkebene und stellt eine Verbindung zwischen den im Bereich der gleichen Stirnfläche 44a oder 44b liegenden Mündungen des Abstütz-Kanalabschnittes 66 und des Rücklauf-Kanalabschnittes 67 her. Exemplarisch erstreckt sich jeder Umlenk-Kanalabschnitt 68, 69 entlang einer Bogenlänge von 180°. Jeder bogenförmige Umlenk-Kanalabschnitt 68, 69 kann bei Bedarf auch noch einen sich an den 180°-Bogen anschließenden linearen Übergangs-Kanalabschnitt aufweisen, der dem jeweils zugeordneten Abstütz-Kanalabschnitt 66 oder Rücklauf-Kanalabschnitt 67 zugewandt ist. Auf diese Weise kann der Umlenk-Kanalabschnitt 68, 69 eine U-förmige Gestalt haben.

Im Bereich des Rücklauf-Kanalabschnittes 67 setzt sich die Kanalwand 65 jedes Umlaufkanals 16, 17 aus einem von dem hinteren Rahmenschenkel 42b gebildeten ersten Wandabschnitt 65a und einem von dem Kernkörper 34 und hierbei insbesondere von dem Hauptabschnitt 47 gebildeten zweiten Wandabschnitt 65b zusammen. Jeder erste Wandabschnitt 65a ist exemplarisch von einem Teilabschnitt des im Querschnitt bevorzugt T-förmig gestalteten hinteren Rahmenschenkels 42b gebildet, durch den der Innenraum der Längsnut 48 in die beiden RücklaufKanalabschnitte 67 unterteilt wird. Die beiden zweiten Wandabschnitte 65b sind jeweils von einem der beiden Schenkel des Hauptabschnittes 47 gebildet, die die Längsnut 48 flankieren, sowie insbesondere auch von einem sich daran anschließenden Bereich des Nutgrundes 53.

Im Bereich des Abstütz-Kanalabschnittes 66 besteht die Kanalwand 65 jedes Umlaufkanals 16, 17 aus einem von dem Kernkörper 34 und hierbei insbesondere von der Abstützrippe 55 gebildeten ersten Wandabschnitt 65c, einem von dem vorderen Rahmenschenkel 42a gebildeten zweiten Wandabschnitt 65d und einem vom vorderen Abdeckabschnitt 62 eines der Abdeckkörper 36, 37 gebildeten dritten Wandabschnitt 65e. Diese drei Wandabschnitte 65c, 65d, 65e schließen sich in der Umfangsrichtung des Kanalquerschnittes aneinander an.

Die zweiten und dritten Wandabschnitte 65d, 65e befinden sich auf einander entgegengesetzten Seiten der Mittelebene 22.

Durch die drei Wandabschnitte 65c, 65d, 65e ist der Abstütz-Kanalabschnitt 66 nur zu einem Großteil begrenzt. Zwischen dem vorderen Rahmenschenkel 42a und dem vorderen Abdeckabschnitt 62 jedes Abdeckkörpers 36, 37 verbleibt ein sich in der Achsrichtung der Längsachse 14 erstreckender schlitzartiger Freiraum, der als Arbeits-Längsschlitz 72 bezeichnet sei und durch den hindurch der Abstütz-Kanalabschnitt 66 von der Vorderseite 24 her zugänglich ist. Die Breite des Arbeits-Längsschlitzes 72 ist geringer als die Breite der sich im Umlaufkanal 16, 17 befindenden Wälzlagerelemente 32, die somit nicht durch den Arbeits-Längsschlitz 72 hindurch herausfallen können. Allerdings ragen die sich momentan in dem Abstütz-Kanalabschnitt 66 befindenden Wälzlagerelemente 32 jeweils partiell durch den Arbeits-Längsschlitz 72 hindurch nach außen, wobei die nach außen ragenden Umfangsabschnitte der Wälzlagerelemente 32 als Arbeitsabschnitte 73 bezeichnet werden können.

Die Wälzlagerelemente 32 liegen mit ihren Arbeitsabschnitten 73 an der zugeordneten Führungsfläche 13 der Führungsschiene 5 an, an der sie sich abwälzen, wenn die Linearführungseinheit 8 bezüglich der Führungsschiene 5 eine Linearbewegung in der Verfahrrichtung 6 ausführt.

Der erste Wandabschnitt 65c, der vom Kernkörper 34 gebildet ist, definiert eine sich in der Kanallängsrichtung 28 erstreckende, im Querschnitt bevorzugt bogenförmig konturierte Abstützfläche 74 zur Abstützung der sich momentan im Abstütz-Kanalabschnitt 66 aufhaltenden Wälzlagerelemente 32 gegen äußere Kräfte, die im Betrieb durch die zugeordnete Führungsschiene 5 eingeleitet werden. Mithin findet im Betrieb der Linearführungseinrichtung 1 durch die sich im Abstütz-Kanalabschnitt 66 befindenden Wälzlagerelemente 32 hindurch eine Kraftübertragung zwischen der Führungsschiene 5 und dem Kernkörper 34 statt. Weder der vordere Rahmenschenkel 44a noch der vordere Abdeckabschnitt 62 erfahren hierbei eine merkliche Beanspruchung. Diese Komponenten dienen im Wesentlichen nur dazu, die Wälzlagerelemente 32 vor der Montage der Linearführungseinheit 8 im Umlaufkanal 16, 17 zurückzuhalten.

Im Bereich jedes Umlenk-Kanalabschnittes 68, 69 setzt sich die Kanalwand 65 jeweils aus einem am stirnseitigen Rahmenschenkel 42c, 42d ausgebildeten ersten Wandabschnitt 65f und einem am benachbarten Abdeckkörper 36, 37 ausgebildeten zweiten Wandabschnitt 65g zusammen. Auch hier schließen sich die ersten und zweiten Wandabschnitte 65f, 65g im Kanalquerschnitt betrachtet aneinander an, bilden also jeweils einen Umfangsabschnitt der betreffenden Kanalwand 65.

Für den ersten Umlaufkanal 16 befindet sich ein erster Wandabschnitt 65f jedes Umlenk-Kanalabschnittes 68, 69 an der Oberseite jedes stirnseitigen Rahmenschenkels 42c, 42d. Für die Umlenk-Kanalabschnitte 68, 69 des zweiten Umlenkkanals 17 sind die ersten Wandabschnitte 65f an der Unterseite der stirnseitigen Rahmenschenkel 42c, 42d ausgebildet. Bevorzugt ist jeder erste Wandabschnitt 65f der Umlenk-Kanalabschnitte 68, 69 von einem bogenförmigen Längenabschnitt 75a einer nutartigen Vertiefung 75 gebildet, die doppelt vorhanden sind und von denen jeweils eine an der Oberseite beziehungsweise Unterseite im Rahmenkörper 35 ausgebildet ist. Die nutartige Vertiefung 75 hat auch noch einen sich entlang des hinteren Rahmenschenkels 42b erstreckenden geradlinigen Längenabschnitt 75b, der sich an jeweils eines der Bogenenden der auf der gleichen Seite des Rahmenkörpers 35 ausgebildeten bogenförmigen Längenabschnitte 75a anschließt.

Mit ihren dem geradlinigen Längenabschnitt 75b entgegengesetzten offenen Endabschnitten 76 münden die bogenförmigen Längenabschnitte 75a an der Innenfläche 56 des betreffenden stirnseitigen Rahmenschenkels 42c, 42d derart zur Rahmenöffnung 38 hin aus, dass sie in den sich dort anschließenden Abstütz-Kanalabschnitt übergehen.

Zweckmäßigerweise verfügt jeder Abdeckkörper 36, 37 an seinem stirnseitigen Abdeckabschnitt 63, 64 an der dem Rahmenkörper 35 zugewandten Seite über eine bogenförmige Nut 77, die über dem gegenüberliegenden bogenförmigen Längenabschnitt 75a angeordnet ist und die den zweiten Wandabschnitt 65g des betreffenden Umlenk-Kanalabschnittes 68, 69 definiert.

Insgesamt ist der Übergang zwischen den Umlenk-Kanalabschnitten 68, 69 und dem Abstütz-Kanalabschnitt 66 bevorzugt so ausgebildet, dass die Wälzlagerelemente 32 einen gewissen Bewegungsspielraum in der Achsrichtung der Querachse 23 haben. Auf diese Weise erfahren die Wälzlagerelemente 32 beim Übertritt aus einem Umlenk-Kanalabschnitt 68, 69 in den Abstütz-Kanalabschnitt 66 keine Zwangsführung durch den Abstütz-Kanalabschnitt 66 und können sich optimal an die sich entlang des Arbeits-Längsschlitzes 72 erstreckende Führungsfläche 13 anlegen. Wenn also die Wälzlagerelemente 32 den Abstütz-Kanalabschnitt 66 durchlaufen, stehen sie zweckmäßigerweise nicht in Kontakt mit dem vorderen Rahmenschenkel 42a und zweckmäßigerweise auch nicht mit dem zugeordneten Abdeckkörper 36, 37.

Die einzelnen Bestandteile der Linearführungseinheit 8 werden insbesondere dadurch zusammengehalten, dass jeder Abdeckkörper 36, 37 im Bereich seiner beiden stirnseitigen Abdeckabschnitte 63, 64 am jeweils zugeordneten stirnseitigen Rahmenschenkel 42c, 42d befestigt ist. Beim Ausführungsbeispiel enthält jeder Abdeckkörper 36, 37 an der Unterseite jedes stirnseitigen Abdeckabschnittes 63, 64 einen Befestigungsvorsprung 78, der in ein Befestigungsloch 79 des benachbarten stirnseitigen Rahmenschenkels 42c, 42d eingreift und darin fixiert ist, beispielsweise durch Verkleben und/oder durch Ultraschallschweißen und/oder durch Laserschweißen. Eine andere Befestigungsmöglichkeit besteht darin, die beiden Abdeckkörper 36, 37 durch den Rahmenkörper 35 hindurch miteinander zu verschrauben oder zu vernieten.

Die Figuren 7 bis 10 zeigen eine bevorzugte Verfahrensweise zur Montage beziehungsweise zum Zusammenbau der Linearführungseinheit 8.

Ausgangspunkt ist ein Zustand, bei dem die Gehäusekörper 34-37 und die Wälzlagerelemente 32 einzeln getrennt vorliegen.

In einer ersten Montagephase wird gemäß Figur 7 der Rahmenkörper 35 in einer bezüglich des Kernkörpers 34 eingenommenen Montage-Schräglage von der Rückseite her auf den Kernkörper 34 gemäß Pfeil 83 aufgesteckt. Hierbei passiert der voreilende vordere Rahmenschenkel 42a den Kernkörper 34 an der Oberseite und der Kernkörper 34 taucht in die Rahmenöffnung 38 ein. Gleichzeitig taucht auch der hintere Rahmenschenkel 42b des Rahmenkörpers 35 in die Längsnut 48 des Kernkörpers 34 ein, wie dies in Figur 8 illustriert ist.

In einer sich anschließenden zweiten Montagephase wird der bezüglich des Kernkörpers 34 schräg liegende Rahmenkörper 35 gemäß Pfeil 84 nach unten verschwenkt, wobei als "Schwenkachse" der sich in der Längsnut 48 abstützende hintere Rahmenschenkel 42b fungiert. Bei dieser Schwenkbewegung 84, der weiterhin auch noch die zuvor geschilderte lineare Aufsteckbewegung 83 überlagert sein kann, gelangt der vordere Rahmenschenkel 42a letztlich in seine Solllage vor der Abstützrippe 55. Dieser Zustand ist in Figur 9 gezeigt.

Als nächstes werden in den oben liegenden ersten Umlaufkanal 16 im Bereich des Abstütz-Kanalabschnittes 66 die Wälzlagerelemente 32 in den ersten Umlaufkanal 16 eingeführt. Dies ist hier problemlos möglich, weil der erste Abdeckkörper 36 noch nicht montiert und der Abstütz-Kanalabschnitt 66 durch den vorderen Abdeckabschnitt 62 des ersten Abdeckkörpers 36 noch nicht abgedeckt ist.

Sind alle Wälzlagerelemente 32 gemäß Pfeil 85 in den ersten Umlaufkanal 16 eingebracht, wird gemäß Pfeil 86 der erste Abdeckkörper 36 aufgesetzt, wodurch der erste Umlaufkanal 16 so verschlossen wird, dass die darin befindlichen Wälzlagerelemente 32 nicht mehr herausfallen können.

Im nächsten Schritt wird die bis dahin montierte Baugruppe umgedreht, so dass der zweite Umlaufkanal 17 oben liegt, und es werden dann gemäß Pfeil 85' die Wälzlagerelemente 32 in den zweiten Umlaufkanal 17 eingebracht, worauf gemäß Pfeil 86' der zweite Abdeckkörper 37 montiert wird. Nun ist die Linearführungseinheit 8 fertig montiert.

Abweichend vom Ausführungsbeispiel ist die Linearführungseinheit 8 bei einer nicht abgebildeten Ausführungsform mit nur einem einzigen Umlaufkanal ausgestattet. Die Ausführungsform mit zwei Umlaufkanälen 16, 17, die bevorzugt spiegelbildlich bezüglich der Rahmenebene 43 ausgebildet sind, wird allerdings als besonders vorteilhaft angesehen, weil sie im Zusammenwirken mit einer Führungsschiene 5 eine gleichzeitige Abstützung in mehreren Richtungen gestattet.

## Patentansprüche

1. Linearführungseinrichtung, mit mindestens einer Linearführungseinheit (8), die ein Gehäuse (15) aufweist, das mindestens einen ringförmig in sich geschlossenen Umlaufkanal (16, 17) definiert, der eine Vielzahl von in der Kanallängsrichtung (28) aufeinanderfolgend angeordneten Wälzlagerelementen (32) aufnimmt, die eine Umlaufbewegung in der Kanallängsrichtung (28) ausführen können, wobei der Umlaufkanal (16, 17) einen die sich in ihm befindenden Wälzlagerelemente (32) gegen äußere Kräfte abstützenden geradlinigen Abstütz-Kanalabschnitt (66) und einen zu dem Abstütz-Kanalabschnitt (66) beabstandeten Rücklauf-Kanalabschnitt (67) aufweist, wobei der Abstütz-Kanalabschnitt (66) längsseits über einen das partielle Hindurchragen der sich in dem Abstütz-Kanalabschnitt (66) befindenden Wälzlagerelemente (32) ermöglichenden Arbeits-Längsschlitz (72) verfügt und das Gehäuse (15) einen Kernkörper (34) und einen den Kernkörper (34) umschließenden, in sich geschlossenen Rahmenkörper (35) aufweist, wobei ein vorderer Rahmenschenkel (42a) des Rahmenkörpers (35) einen Wandabschnitt (65d) des Abstütz-Kanalabschnittes (66) und ein hinterer Rahmenschenkel (42b) des Rahmenkörpers (35) einen Wandabschnitt (65a) des Rücklauf-Kanalabschnittes (67) bildet und wobei das Gehäuse (15) einen Abdeckkörper (36, 37) aufweist, der einen Wandabschnitt (65e) des Abstütz-Kanalabschnittes (66) bildet und gemeinsam mit dem Kernkörper (34) und dem vorderen Rahmenschenkel (42a) den Abstütz-Kanalabschnitt (66) begrenzt, **dadurch gekennzeichnet, dass** der Arbeits-Längsschlitz (72) längsseits einerseits von dem Abdeckkörper (36, 37) und andererseits von dem vorderen Rahmenschenkel (42a) begrenzt ist.

2. Linearführungseinrichtung nach Anspruch 1, **dadurch gekennzeichnet, dass** der Kernkörper (34) an einer dem vorderen Rahmenschenkel (42a) des Rahmenkörpers (35) zugewandten Vorderseite (24) einen als Abstützfläche (74) für die sich momentan in dem Abstütz-Kanalabschnitt (66) befindenden Wälzlagerelemente (32) fungierenden Wandabschnitt (65c) des Abstütz-Kanalabschnittes (66) bildet.

3. Linearführungseinrichtung nach Anspruch 1 oder 2, **dadurch gekennzeichnet, dass** der Kernkörper (34) an einer dem hinteren Rahmenschenkel (42b) des Rahmenkörpers (35) zugeordneten Rückseite (25) eine sich in der Längsrichtung des Rücklauf-Kanalabschnittes (67) erstreckende Längsnut (48) aufweist, wobei der hintere Rahmenschenkel (42b) in die Längsnut (48) eintaucht und gemeinsam mit dem Kernkörper (34) die Kanalwand (65) des Rücklauf-Kanalabschnittes (67) definiert.

4. Linearführungseinrichtung nach Anspruch 3, **dadurch gekennzeichnet, dass** sich der hintere Rahmenschenkel (42d) in der Längsnut (48) des Kernkörpers (34) an gleichzeitig beiden Nutflanken (54a, 54b) dieser Längsnut (48) abstützt.

5. Linearführungseinrichtung nach Anspruch 3 oder 4, **dadurch gekennzeichnet, dass** der Kernkörper (34) einen die Längsnut (48) definierenden, im Querschnitt gesehen U-förmigen Hauptabschnitt (47) und eine an der der Längsnut (48) entgegengesetzten Seite an dem Hauptabschnitt (47) in dessen Längsrichtung verlaufend angeordnete, eine Abstützfläche (74) des Abstütz-Kanalabschnittes (66) definierende Abstützrippe (55) aufweist.

6. Linearführungseinrichtung nach Anspruch 5, **dadurch gekennzeichnet, dass** der Rahmenkörper (35) eine den vorderen und den hinteren Rahmenschenkel (42a, 42b) enthaltende Rahmenebene (43) aufspannt und die Abstützrippe (55) sich ebenfalls in dieser Rahmenebene (43) erstreckt.

7. Linearführungseinrichtung nach einem der Ansprüche 3 bis 6, **dadurch gekennzeichnet, dass** der Rahmenkörper (35) und der Kernkörper (34) derart aneinander angepasst sind, dass der Rahmenkörper (35) bei der Montage der Linearführungseinheit (8) in einer ersten Montagephase in einer bezüglich des Kernkörpers (34) eingenommenen Montage-Schräglage von der Rückseite (25) her so auf den Kernkörper (34) aufsteckbar ist, dass der hintere Rahmenschenkel (42b) in die Längsnut (48) des Kernkörpers (34) eintaucht und der vordere Rahmenschenkel (42a) über den Kernkörper (34) hinweggreift und dass in einer sich anschließenden zweiten Montagephase der Rahmenkörper (35) um seinen in der Längsnut (48) befindlichen hinteren Rahmenschenkel (42b) bezüglich des Kernkörpers (34) verschwenkbar ist, um den vorderen Rahmenschenkel (42a) in eine dem Kernkörper (34) vorgelagerte Stellung zu verbringen.

8. Linearführungseinrichtung nach einem der Ansprüche 1 bis 7, **dadurch gekennzeichnet, dass** sich der Rahmenkörper (35) mit den der von ihm umschlossenen Rahmenöffnung (38) zugewandten Innenflächen (56) seiner Rahmenschenkel (42) derart an der Vorderseite (24), der Rückseite (25) und den beiden Stirnseiten (44a, 44b) des Kernkörpers (34) abstützt, dass der Rahmenkörper (35) und der Kernkörper (34) in einer von den Rahmenschenkeln (42) aufgespannten Rahmenebene (43) relativ zueinander unbeweglich fixiert sind.

9. Linearführungseinrichtung nach Anspruch 8 in Verbindung mit Anspruch 5 oder 6, **dadurch gekennzeichnet, dass** sich der Rahmenkörper (35) mit seinem hinteren Rahmenschenkel (42b) am Nutgrund (53) der Längsnut (48) des Kernkörpers (34) und mit seinem vorderen Rahmenschenkel (42a) an der der Längsnut (48) abgewandten Kopffläche (57) der Abstützrippe (55) abstützt.

10. Linearführungseinrichtung nach einem der Ansprüche 1 bis 9, **dadurch gekennzeichnet, dass** der Umlaufkanal (16, 17) auch zwei stirnseitig angeordnete, jeweils zum einen mit dem Abstütz-Kanalabschnitt (66) und zum anderen mit dem Rücklauf-Kanalabschnitt (67) verbundene bogenförmige Umlenk-Kanalabschnitte (67, 68) aufweist.

11. Linearführungseinrichtung nach Anspruch 10, **dadurch gekennzeichnet, dass** der Rahmenkörper (35) über zwei den Kernkörper (34) stirnseitig flankierende stirnseitige Rahmenschenkel (42c, 42d) verfügt, die jeweils einen Wandabschnitt (65f) eines der Umlenk-Kanalabschnitte (68, 69) bilden.

12. Linearführungseinrichtung nach Anspruch 11, **dadurch gekennzeichnet, dass** die von dem Rahmenkörper (35) gebildeten Wandabschnitte (65a, 65g) des Rücklauf-Kanalabschnittes (67) und der beiden Umlenk-Kanalabschnitte (68, 69) von einer in dem Rahmenkörper (35) ausgebildeten nutartigen Vertiefung (75) gebildet sind, die an dem Rahmenkörper (35) an den der Rahmenöffnung (38) zugewandten Innenflächen (56) der beiden stirnseitigen Rahmenschenkel (42c, 44d) ausmündet und dort von einander entgegengesetzten Stirnseiten her in den Abstütz-Kanalabschnitt (66) übergeht.

13. Linearführungseinrichtung nach einem der Ansprüche 1 bis 12, **dadurch gekennzeichnet, dass** der Abdeckkörper (36, 37) eine U-förmige Gestalt hat, wobei er eine Aussparung (58) aufweist, in die der Kernkörper (34) eingreift und über zwei diese Aussparung (58) beidseits flankierende stirnseitige Abdeckabschnitte (63, 64) verfügt, die stirnseitig beidseits über den Kernkörper (34) vorstehen.

14. Linearführungseinrichtung nach Anspruch 13 in Verbindung mit Anspruch 11 oder 12, **dadurch gekennzeichnet, dass** die beiden stirnseitigen Abdeckabschnitte (63, 64) jeweils einen der beiden stirnseitigen Rahmenschenkel (42c, 42d) des Rahmenkörpers (35) zumindest im Bereich des Umlenk-Kanalabschnittes (68) abdecken und/oder dass der Abdeckkörper (36, 37) an seinen beiden stirnseitigen Abdeckabschnitten (63, 64) am jeweils zugeordneten stirnseitigen Rahmenschenkel (42c, 42d) des Rahmenkörpers (35) befestigt ist.

15. Linearführungseinrichtung nach einem der Ansprüche 1 bis 14, **dadurch gekennzeichnet, dass** die Linearführungseinheit (8) über zwei jeweils mit Wälzlagerelementen (32) bestückte Umlaufkanäle (16, 17) verfügt, wobei die Linearführungseinheit (8) zweckmäßigerweise bezüglich einer die Rahmenschenkel (42) enthaltenden Rahmenebene (43) spiegelbildlich ausgebildet ist.

16. Linearführungseinrichtung nach einem der Ansprüche 1 bis 15, **dadurch gekennzeichnet, dass** sie mindestens eine Führungsschiene (5) aufweist, an der mindestens eine Linearführungseinheit (8) mit den durch den Arbeits-Längsschlitz (72) eines Umlaufkanals (16, 17) hindurchragenden Abschnitten der Wälzlagerelemente (32) anliegt, wobei die Linearführungseinheit (8) und die Führungsschiene (5) relativ zueinander linear bewegbar sind.

## Claims

1. Linear guide device with at least one linear guide unit (8) which has a housing (15) which defines at least one annular self-contained circulating channel (16, 17) which accommodates a multiplicity of roller bearing elements (32) arranged consecutively in the channel longitudinal direction (28) and able to execute a circulatory movement in the channel longitudinal direction (28), wherein the circulating channel (16, 17) has a straight-line support channel section (66) supporting the roller bearing elements (32) it contains against external forces, and a return channel section (67) at a distance from the support channel section (66), wherein the support channel section (66) has on the long side an operating longitudinal slot (72) allowing the partial protrusion of the roller bearing elements (32) present in the support channel section (66), and the housing (15) has a core body (34) and a self-contained framework body (35) encompassing the core body (34), wherein a front frame leg (42a) of the framework body (35) forms a wall section (65d) of the support channel section (66) and a rear frame leg (42b) forms a wall section (65a) of the return channel section (67) and wherein the housing (15) has a covering body (36, 37) which forms a wall section (65e) of the support channel section (66) and, together with the core body (34) and the front frame leg (42a), bounds the support channel section (66), **characterised in that** the operating longitudinal slot (72) is bounded on the long side on the one hand by the covering body (36, 37) and on the other hand by the front frame leg (42).

2. Linear guide device according to claim 1, **characterised in that** the core body (34) forms, on a front (24) facing the front frame leg (42a) of the framework body (35), a wall section (65c) of the support channel section (66) acting as support surface (74) for the roller bearing elements (32) momentarily present in the support channel section (66).

3. Linear guide device according to claim 1 or 2, **characterised in that** the core body (34) has, at a rear (25) assigned to the rear frame leg (42b) of the framework body (35), a longitudinal slot (48) extending in the longitudinal direction of the return channel section (67), wherein the rear frame leg (42b) dips into the longitudinal slot (48) and, together with the core body (34), defines the channel wall (65) of the return channel section (67).

4. Linear guide device according to claim 3, **characterised in that** the rear frame leg (42d) in the longitudinal slot (48) of the core body (34) supports this longitudinal slot (48) on both slot sides (54a, 54b) simultaneously.

5. Linear guide device according to claim 3 or 4, **characterised in that** the core body (34) has a main section (47), U-shaped in cross-section, defining the longitudinal slot (48), and a support rib (55) defining a support surface (74) of the support channel section (66), arranged on the main section (47) running in its longitudinal direction, on the side opposite the longitudinal slot (48).

6. Linear guide device according to claim 5, **characterised in that** the framework body (35) spans a framework plane (43) containing the front and rear frame legs (42a, 42b), and the support rib (55) also extends in this framework plane (43).

7. Linear guide device according to any of claims 3 to 6, **characterised in that** the framework body (35) and the core body (34) are so matched to one another that the framework body (35), in the course of assembly of the linear guide unit (8) in a first assembly phase in an inclined assembly position relative to the core body (34), may be fitted on to the core body (34) from the rear (25) in such a way that the rear frame leg (42b) dips into the longitudinal slot (48) of the core body (34) and reaches the front frame leg (42a) across the core body (34), and that in a subsequent second assembly phase the framework body (35) may be swivelled around its rear frame leg (42b) located in the longitudinal slot (48), relative to the core body (34), in order to bring the front frame leg (42a) into a position mounted in front of the core body (34).

8. Linear guide device according to any of claims 1 to 7, **characterised in that** the framework body (35). with the inner surfaces (56) of its frame legs (42) facing the framework opening (38) encompassed by it, rests in such a way on the front (24), the rear (25) and the two end faces (44a, 44b) of the core body (34), that the framework body (35) and the core body (34) are fixed immovably relative to one another in a framework plane (43) spanned by the frame legs (42).

9. Linear guide device according to claim 8 in conjunction with claim 5 or 6, **characterised in that** the framework body (35) rests with its rear frame leg (42b) on the slot base (53) of the longitudinal slot (48) of the core body (34), and with its front frame leg (42a) on the head surface (57) of the support rib (55) facing away from the longitudinal slot (48).

10. Linear guide device according to any of claims 1 to 9, **characterised in that** the circulating channel (16, 17) also has two curved diverting channel sections (67, 68), provided at the end face, respectively connected on the one hand to the support channel section (66) and on the other hand to the return channel section (67).

11. Linear guide device according to claim 10, **characterised in that** the framework body (35) has two end-face frame legs (42c, 42d) flanking the ends of the core body (34), each forming a wall section (65f) of one of the diverting channel sections (68, 69).

12. Linear guide device according to claim 11, **characterised in that** the wall sections (65a, 65g) of the return channel section (67) formed by the framework body (35) and of the two diverting channel sections (68, 69) are formed by a slot-like recess (75) made in the framework body (35), which opens out at the inner surfaces (56) of the two end-face frame legs (42c, 44d) facing the framework opening (38), where it merges into the support channel section (66) from opposite end faces.

13. Linear guide device according to any of claims 1 to 12, **characterised in that** the covering body (36, 37) is U-shaped with a recess (58) in which the core body (34) engages and having two end cover sections (63, 64) flanking this recess (58) on either side, and protruding beyond the core body (34) at the end.

14. Linear guide device according to claim 13 in conjunction with claim 11 or 12, **characterised in that** the two end-face cover sections (63, 64) each cover one of the two end-face frame legs (42c, 42d) of the framework body (35), at least in the area of the diverting channel section (68) and/or that the covering body (36, 37) is fastened at its two end-face cover sections (63, 64) to the respectively assigned end-face frame leg (42c, 42d) of the framework body (35).

15. Linear guide device according to any of claims 1 to 14, **characterised in that** the linear guide unit (8) has two circulating channels (16, 17), each equipped with roller bearing elements (32), wherein the linear guide unit (8) is expediently mirror-imaged relative to a framework plane (43) containing the frame legs (42).

16. Linear guide device according to any of claims 1 to 15, **characterised in that** it has at least one guide rail (5), on which lies at least one linear guide unit (8) with the sections of the roller bearing elements (32) extending through the operating longitudinal slot (72) of a circulating channel (16, 17), wherein the linear guide unit (8) and the guide rail (5) are capable of linear movement relative to one another.

## Revendications

1. Système de guidage linéaire, comprenant au moins une unité de guidage linéaire (8), qui présente un boîtier (15), qui définit au moins un canal de circulation (16, 17) fermé sur lui-même de manière à présenter une forme annulaire, lequel reçoit une pluralité d'éléments de palier à roulement (32) disposés de manière à se suivre les uns les autres dans la direction longitudinale de canal (28), lesquels peuvent exécuter un déplacement de circulation dans la direction longitudinale de canal (28), dans lequel le canal de circulation (16, 17) présente une section de canal de soutien (66) rectiligne soutenant à l'encontre de forces extérieures les éléments de palier à roulement (32) s'y trouvant et une section de canal de retour (67) tenue à distance de la section de canal de soutien (66), dans lequel la section de canal de soutien (66) dispose côté longitudinal d'une entaille longitudinale de travail (72) permettant un dépassement de part en part partiel des éléments de palier à roulement (32) se trouvant dans la section de canal de soutien (66) et le boîtier (15) présente un corps formant noyau (34) et un corps formant cadre (35) fermé sur lui-même renfermant le corps formant noyau (34), dans lequel une branche de cadre (42a) avant du corps formant cadre (35) forme une section de paroi (65d) de la section de canal de soutien (66) et une branche de cadre (42b) arrière du corps formant cadre (35) forme une section de paroi (65a) de la section de canal de retour (67) et dans lequel le boîtier (15) présente un corps de recouvrement (36, 37), qui forme une section de paroi (65e) de la section de canal de soutien (66) et délimite, conjointement avec le corps formant noyau (34) et la branche de cadre (42a) avant, la section de canal de soutien (66), **caractérisé en ce que** l'entaille longitudinale de travail (72) est délimitée côté longueur d'une part par le corps de recouvrement (36, 37) et d'autre part par la branche de cadre (42a) avant.

2. Système de guidage linéaire selon la revendication 1, **caractérisé en ce que** le corps formant noyau (34) forme, au niveau d'un côté avant (24) tourné vers la branche de cadre (42a) avant du corps de cadre (35), une section de paroi (65c) faisant office de surface de soutien (74) pour les éléments de palier à roulement (32) se trouvant actuellement dans la section de canal de soutien (66), de la section de canal de soutien (66).

3. Système de guidage linéaire selon la revendication 1 ou 2, **caractérisé en ce que** le corps formant noyau (34) présente, au niveau d'un côté arrière (25) associé à la branche de cadre (42b) arrière du corps de cadre (35), une rainure longitudinale (48) s'étendant dans la direction longitudinale de la section de canal de retour (67), dans lequel la branche de cadre (42b) arrière s'enfonce dans la rainure longitudinale (48) et définit, conjointement avec le corps formant noyau (34), la paroi de canal (65) de la section de canal de retour (67).

4. Système de guidage linéaire selon la revendication 3, **caractérisé en ce que** la branche de cadre arrière (42d) prend appui, dans la rainure longitudinale (48) du corps formant noyau (34), simultanément au niveau des deux flancs de rainure (54a, 54b) de ladite rainure longitudinale (48).

5. Système de guidage linéaire selon la revendication 3 ou 4, **caractérisé en ce que** le corps formant noyau (34) présente une section principale (47) définissant la rainure longitudinale (48), présentant une forme de U vue dans la section transversale et une nervure de soutien (55) disposée au niveau du côté opposé à la rainure longitudinale (48) au niveau de la section principale (47) en s'étendant dans la direction longitudinale de cette dernière, définissant une surface de soutien (74) de la section de canal de soutien (66).

6. Système de guidage linéaire selon la revendication 5, **caractérisé en ce que** le corps formant cadre (35) forme un plan de cadre (43) contenant la branche de cadre avant et la branche de cadre arrière (42a, 42b), et **en ce que** la nervure de soutien (55) s'étend de la même manière dans ledit plan de cadre (43).

7. Système de guidage linéaire selon l'une quelconque des revendications 3 à 6, **caractérisé en ce que** le corps formant cadre (35) et le corps formant noyau (34) sont adaptés l'un à l'autre de telle manière que le corps de cadre (35) peut être emboîté depuis le côté arrière (25) sur le corps formant noyau (34) lors du montage de l'unité de guidage linéaire (8), lors d'une première phase de montage dans une position inclinée de montage adoptée par rapport au corps formant noyau (34) de telle sorte que la branche de cadre arrière (42b) s'enfonce dans la rainure longitudinale (48) du corps formant noyau (34) et que la branche de cadre (42a) avant passe par-dessus le corps formant noyau (34), et **en ce que** lors d'une deuxième phase de montage ayant lieu immédiatement après, le corps formant cadre (35) peut être pivoté autour de sa branche de cadre (42b) arrière se trouvant dans la rainure longitudinale (48) par rapport au corps formant noyau (34) afin d'amener la branche de cadre (42a) avant dans une position située en amont du corps formant noyau (34).

8. Système de guidage linéaire selon l'une quelconque des revendications 1 à 7, **caractérisé en ce que** le corps formant cadre (35) prend appui, par les surfaces intérieures (56), tournées vers l'orifice de cadre (38) fermé par le corps formant cadre, de ses branches de cadre (42) de telle manière au niveau du côté avant (24), du côté arrière (25) et des deux côtés frontaux (44a, 44b) du corps formant noyau (34) que le corps de cadre (35) et le corps formant noyau (34) sont fixés de manière immobile l'un par rapport à l'autre dans un plan de cadre (43) formé par les branches de cadre (42).

9. Système de guidage linéaire selon la revendication 8 en lien avec la revendication 5 ou 6, **caractérisé en ce que** le corps formant cadre (35) prend appui par sa branche de cadre (42b) arrière au niveau du fond de rainure (53) de la rainure longitudinale (48) du corps formant noyau (34) et par sa branche de cadre (42a) avant au niveau de la surface de tête (57), opposée à la rainure longitudinale (48), de la nervure de soutien (55).

10. Système de guidage linéaire selon l'une quelconque des revendications 1 à 9, **caractérisé en ce que** le canal de circulation (16, 17) présente également deux sections de canal de renvoi (67, 68) présentant une forme d'arc disposées côté frontal, reliées respectivement d'une part à la section de canal de soutien (66) et d'autre part à la section de canal de retour (67).

11. Système de guidage linéaire selon la revendication 10, **caractérisé en ce que** le corps formant cadre (35) dispose de deux branches de cadre (42c, 42d) situées côté frontal encadrant à la manière de flancs côté frontal le corps format noyau (34), lesquelles branches de cadre forment respectivement une section de paroi (65f) d'une des sections de canal de renvoi (68, 69).

12. Système de guidage linéaire selon la revendication 11, **caractérisé en ce que** les sections de paroi (65a, 65g), formées par le corps de cadre (35), de la section de canal de retour (67) et des deux sections de canal de renvoi (68, 69) sont formées par un renfoncement (75) de type rainure réalisé dans le corps de cadre (35), lequel débouche au niveau du corps formant cadre (35) au niveau des surfaces intérieures (56), tournées vers l'orifice de cadre (38), des deux branches de cadre (42c, 44d) situées côté frontal et devient ici, depuis des côtés frontaux opposés les uns aux autres, la section de canal de soutien (66).

13. Système de guidage linéaire selon l'une quelconque des revendications 1 à 12, **caractérisé en ce que** le corps de recouvrement (36, 37) a une forme en U, dans lequel il présente un évidement (58), avec lequel le corps formant noyau (34) vient en prise, et il dispose de deux sections de recouvrement (63, 64) situées côté frontal encadrant à la manière de flancs de part et d'autre ledit évidement (58), lesquelles font saillie côté frontal de part et d'autre au-delà du corps formant noyau (34).

14. Système de guidage linéaire selon la revendication 13 en lien avec la revendication 11 ou 12, **caractérisé en ce que** les deux sections de recouvrement (63, 64) situées côté frontal recouvrent respectivement une des deux branches de cadre (42c, 42d) situées côté frontal du corps de cadre (35) au moins dans la zone de la section de canal de renvoi (68), et/ou **en ce que** le corps de recouvrement (36, 37) est fixé, au niveau de ses deux sections de recouvrement (63, 64) situées côté frontal, au niveau de la branche de cadre (42c, 42d) située côté frontal respectivement associée du corps de cadre (35).

15. Système de guidage linéaire selon l'une quelconque des revendications précédentes 1 à 14, **caractérisé en ce que** l'unité de guidage linéaire (8) dispose de deux canaux de circulation (16, 17) équipés respectivement d'éléments de palier à roulement (32), dans lequel l'unité de guidage linéaire (8) est réalisée de manière appropriée en image miroir par rapport à un plan de cadre (43) contenant les branches de cadre (42).

16. Système de guidage linéaire selon l'une quelconque des revendications 1 à 15, **caractérisé en ce qu'**elle présente au moins un rail de guidage (5), au niveau duquel au moins une unité de guidage linéaire (8) repose par les sections, dépassant de part en part l'entaille longitudinale de travail (72) d'un canal de circulation (16, 17), des éléments de palier à roulement (32), dans lequel l'unité de guidage linéaire (8) et le rail de guidage (5) peuvent être déplacés de manière linéaire l'une par rapport à l'autre.
